# EUROPÄISCHE PATENTANMELDUNG

(11) **EP 2 810 772 A1**
(43) Veröffentlichungstag der Anmeldung: **10.12.2014**
(21) Anmeldenummer: 13171000.6
(22) Anmeldetag: 07.06.2013
(51) Int. Cl.: B32B 7/04, B32B 27/12, B32B 27/20, B32B 37/00, B32B 37/04

(54) **Wasserdampfdurchlässiges wasserdichtes Textillaminat und Verfahren zu dessen Herstellung**

(71) Anmelder: Leister Technologies AG, 6056 Kägiswil (CH)
(72) Erfinder: Gubler, Ulrich, 6343 Buonas (CH); Ott, Simon, 6004 Luzern (CH); Weder, Markus, 9230 Flawil (CH); Lehmeier, Frederike, 9000 St. Gallten (CH)
(74) Vertreter: Klocke, Peter

(57) **Zusammenfassung**

Wasserdampfdurchlässiges wasserdichtes Textillaminat (1), mit mindestens zwei übereinander angeordneten miteinander verbundenen Lagen (2, 2a) aus ebenem Bahnmaterial, wobei eine Kunststofffaserfäden (3) aufweisende offene Stoffbahn (4) eine Oberschicht (5) und eine folienartige wasserdampfdurchlässige wasserdichte thermoplastische Membranbahn (6) eine Unterschicht (5a) bildet. Dabei weisen die Kunststofffaserfäden (3) der Stoffbahn (4) erhobene Fadenbereiche (7) auf, die an der Membranbahn (6) in Anlage gehalten und/oder in die Membranbahn (6) partiell eingeschmolzen sind, wobei die Membranbahn (6) stoffschlüssige Verschmelzungsstellen (8) mit den erhobenen Fadenbereiche (7) aufweist, die erfindungsgemäß mittels Laserlicht (10) im Laserdurchstrahlverfahren erzeugt sind.

## Beschreibung

Die Erfindung betrifft ein wasserdampfdurchlässiges wasserdichtes Textillaminat, mit mindestens zwei übereinander angeordneten miteinander verbundenen Lagen aus ebenem Bahnmaterial, wobei eine Kunststofffaserfäden aufweisende offene Stoffbahn eine Oberschicht und eine folienartige wasserdampfdurchlässige wasserdichte thermoplastische Membranbahn eine Unterschicht bildet, und wobei die Kunststofffaserfäden der Stoffbahn erhobene Fadenbereiche aufweisen, die an der Membranbahn in Anlage gehalten und/oder mit der Membranbahn partiell verschmolzen sind. Die Erfindung betrifft außerdem ein Verfahren zur Herstellung eines solchen Textillaminates.

Schutzkleidung zum Schutz vor Regen und anderen Feuchtigkeitseinflüssen sollen dem Träger der Schutzkleidung dadurch trocken halten, dass zum einen das Eindringen von Wasser in die Kleidung von außen verhindert wird und zum anderen der durch Transpiration zur Körpertemperaturregelung erzeugte Schweiß durch die Kleidung von innen nach außen gelangen kann. Demzufolge muss komfortable wetterschützende Kleidung wasserdicht und atmungsfähig (wasserdampfdurchlässig) sein. Dabei ist es jedoch nicht erforderlich, dass Luft durch die Kleidung hindurch dringen kann, lediglich der von der Schweißentwicklung herrührende Wasserdampf muss von innen nach außen transportiert werden können (aufgrund des Wasserdampfpartialdruckunterschieds von innen nach aussen), damit die Unterkleidung nicht feucht wird.

Für diesen Zweck ist es inzwischen bekannt und üblich, die Bekleidung aus einem feuchtigkeitsdichten, jedoch wasserdampfdurchlässigen textilen Verbundmaterial, d. h. einem Textillaminat herzustellen, das mindestens zwei übereinander angeordnete, miteinander verbundene Lagen aus einer textilen Stoffbahn und einer folienartigen wasserdampfdurchlässigen dünnen thermoplastischen Membranbahn aufweist, wobei die Stoffbahn die Oberschicht und die Membranbahn die Unterschicht bildet. Die Wasserdampfdurchlässigkeit kann durch Mikroporen in der Membran erzielt werden oder durch hydrophile Mikroregionen durch die Wasser hindurchdiffundieren kann in der ansonsten hydrophoben Folie. Letzte werden auch als geschlossenporig oder porenlos bezeichnet und sind auch luftdicht, da keine eigentlichen Öffnungen in der Membran existieren. In der Regel weist eine solche Schutzkleidung auch noch ein eingearbeitetes Innenfutter als dritte Lage zum Schutz der Membran auf.

Materialien für die Unterschicht von atmungsaktiven wasserdichten Textillaminaten werden unter mehreren bekannten Warenzeichen weltweit vertrieben. Dabei handelt es sich um sehr dünne thermoplastische Membranfolien, die nur eine sehr geringe mechanische Beanspruchbarkeit haben, und daher nicht ohne zusätzliche Stabilisierung als Zwischenfutter zwischen der textilen Oberschicht und dem textilen Innenfutter in Kleidungstücken verarbeitet werden können. Diese sehr flexiblen Membranfolien müssen auf ein dickeres weiches Textilmaterial oder auf die textile Oberschicht oder das textile Innenfutter aufkaschiert werden, d. h. mit diesen über Verbindungspunkte oder Verbindungslinien miteinander verbunden werden, die ein regelmäßiges oder unregelmäßiges Muster bilden.

Es ist aus dem Stand der Technik bekannt, atmungsaktive Membranen mit Klebepunkten auf Textilstoffe zu laminieren. Häufig erfolgt die Verbindung der Membranbahn mit der Stoffbahn durch Aufbringen von voneinander beabstandeten Schmelzkleberpunkten auf die Stoffbahn und anschließendes Zusammenpressen der aufeinander gelegten Stoffbahn mit der Membranbahn unter gleichzeitiger Wärmezufuhr zur Aktivierung des Schmelzklebers. An den Stellen an denen die Klebepunkte angeordnet sind, ist die Atmungsaktivität der Membran dann nahezu blockiert und der Rₑₜ-Wert der Membran steigt deutlich an. Zur Reduzierung dieses Nachteils offenbart die DE 38 36 434 A1 ein Verfahren zur Herstellung eines gattungsgemäßen Textillaminates, bei dem dünnflüssiger Schmelzkleber in Form feinster Tröpfchen auf einer der zu verbindenden Seiten der als textiles Bahnmaterial verwendeten Stoffbahn oder der folienartigen Membranbahn aufgesprüht wird. Somit wird die Membran nahezu vollflächig mit dem Stoff verklebt. Damit werden zwar kleinere Schmelzkleberpunkte erreicht, jedoch die aktive Klebefläche nicht wesentlich reduziert.

Um mehr atmungsaktive Fläche nach dem Verbinden der Membranbahn mit der Stoffbahn zur Verfügung zu stellen, ist aus der EP 0 163 269 A2 ein Verfahren zum Laminieren einer thermoplastischen atmungsfähigen Folie auf ein Gewebe zur Erzeugung einer flachen Abdeckung auf dem Gewebe bekannt, bei dem die Gewebefasern mit einem im infraroten Wellenbereich absorbierenden Material bedeckt werden. Nach dem die beiden Lagen übereinander angeordnet sind, wird die Membranfolie und das beschichtete Fasergewebe einer Infrarotstrahlung aus einer Strahlungsquelle so lange ausgesetzt, bis die die Infrarotstrahlung absorbierende Schicht des Fasergewebes die Folie bis zu der Erweichungstemperatur erwärmt. Dabei wird die Folie nur dort erweicht, wo sie die beschichteten Fasern berührt und nicht an den Teilen der Folie, die die Zwischenräume des Fasergewebes abdeckt. Zum Verbinden der Bahnen miteinander, werden die Membranfolie und das Fasergewebe durch Sog- oder Druckeinwirkung dann solange aneinander gepresst, bis der Folien-Gewebe-Verbund unter Beibehaltung des Kontaktes abgekühlt ist. Auf diese Weise werden die erhobenen Faserbereiche partiell in die Membranfolie eingeschmolzen. Auch in diesem Fall wird eine nahezu vollständig flächenhafte Verbindung der Membranbahn mit der Stoffbahn erreicht, wodurch die aktive Fläche ähnlich begrenzt ist, wie bei dem aus der DE 38 36 434 A1 bekannten Sprühverfahren.

Ausgehend von dem vorstehend beschriebenen Stand der Technik liegt der Erfindung die Aufgabe zugrunde, eine Möglichkeit vorzuschlagen, die zu einer vergrößerten aktiven Fläche der Membranbahn nach dem Verbinden mit der Stoffbahn führt.

Diese Aufgabe wird erfindungsgemäß durch ein wasserdampfdurchlässiges wasserdichtes Textillaminat mit den Merkmalen des Patentanspruchs 1 sowie durch ein Verfahren zum Herstellen eines derartigen wasserdampfdurchlässigen Textillaminats mit den Merkmalen des nebengeordneten Patentanspruchs 6 gelöst. Weitere vorteilhafte Ausgestaltungen sind den jeweils rückbezogenen Patentansprüchen zu entnehmen.

Demnach weist die Membranbahn des erfindungsgemäßen Textillaminats Verschmelzungsstellen für die erhobenen Fadenbereiche der Kunststofffaserfäden der Stoffbahn auf, die mittels Laserlicht im Laserdurchstrahlverfahren erzeugt sind. Das Laserdurchstrahlverfahren ist an sich bekannt. Es wird üblicherweise zum Schweißverbinden von plastifizierbaren Kunststoffteilen eingesetzt. Es eignet sich besonders für druckfeste und biegesteife beispielsweise platten- oder rohrförmige Teile, die überlappend in direktem Kontakt angeordnet sind. Bei diesen Verfahren werden üblicherweise die einander übergreifenden Teile gegeneinander gepresst und mit einem Laserstrahl in einem Schweißbereich verschweißt. Es können damit auch flexible bahnförmige Kunststoffmaterialen ab einer gewissen Dicke sicher und dichtend miteinander verschweißt werden. Überraschend hat sich herausgestellt, dass das Laserdurchstrahlverfahren auch zum Verbinden von flexiblen folienartigen Kunststoffmaterial mit Kunststofffaserfäden aufweisenden Textilmaterial anwendbar ist. Dies bedingt jedoch eine spezielle Art der Anpresstechnik und eine geschickte Wahl der Schweißparameter. Damit lassen sich auch extrem dünne, beispielsweise wasserdampfdurchlässige Membranbahnen, wie sie als atmungsaktivausgestattete Membranen für atmungsaktive wasserdichte Kleidung verwendet werden, an Stoffbahnen anlaminieren. Dabei handelt es sich um ein besonders schonendes Verfahren, bei dem Faserbereiche der Stoffbahn örtlich in die dünne und empfindliche thermoplastische Membranbahn unter Einwirkung von Laserlicht und Anwendung von Druck stoffschlüssig verschmolzen, d. h. miteinander verschweißt werden. Das Verfahren ist uneingeschränkt nutzbar für alle Arten von Kunststofffaserfäden aufweisenden Textilstoffen, unabhängig von dem Material und der Herstellungsart. Besonders eignet sich das neue Verfahren zum Schweißverbinden von vorstehend spezifizierten Stoffbahnen mit mindestens einer Membranbahn, die ein schweißtechnisch kompatibles Polymer aufweisen. Typisch sind dies beispielsweise Polyester- oder Polyurethan-Polymere. Die dünne extrem flexible und mechanisch leicht beschädigbare Membranbahn kann zudem zum einfacheren Handling auch auf einer Trägerfolie angeordnet verarbeitet werden, sofern diese aus einem zu der Membranbahn schweißtechnisch inkompatiblen Material besteht. Die für das Laserlicht transparente Trägerfolie befindet sich auf der der Stoffbahn abgewandten Seite der Membranbahn und ist einfach nach dem Laserlaminieren der Membranbahn mit der Stoffbahn von der Membranbahn abziehbar. Ein derartiges Textillaminat kann beispielsweise zu wetterschützenden und atmungsaktiven Bekleidungsstücken weiterverarbeitet werden.

Ein Schweißen mit Ultraschall oder anderen herkömmlichen Schweißtechniken beschädigt die dünne Membran durch die mechanische Wechselwirkung und führt zu Fehlstellen, bei denen flüssiges Wasser von der Stoffbahn her die Membranbahn durchdringen kann. Dies wird beim Laserdurchstrahlverfahren zuverlässig vermieden.

Generell kann das erfindungsgemäße Textillaminat auch dreilagig ausgebildet sein. Es umfasst dann eine Kunststofffaserfäden aufweisende offene Stoffbahn eine folienartige wasserdampfdurchlässige wasserdichte thermoplastische Membranbahn und eine weitere wasserdichte thermoplastische Folienbahn, die ebenfalls als Membran ausgebildet sein kann. Die Stoffbahn ist in diesem Fall vorzugsweise zwischen der Membranbahn der Folienbahn angeordnet, wobei die Membranbahn und die Folienbahn an den erhobenen Fadenbereichen der Kunststofffaserfäden der Stoffbahn in Anlage gehalten und/oder mit diesen partiell verschmolzen sind. Dabei bildet die Stoffbahn eine Oberschicht, die wasserdampfdurchlässige Membranbahn eine Unterschicht und die zusätzliche Folienbahn eine Deckschicht des Textillaminats. Ein solches Textillaminat, bei dem die Folienbahn ebenfalls eine Membranbahn ist, kann beispielsweise für Cool-Pad-Anwendungen weiterverarbeitet werden. Bei so hergestellten Cool-Pads sind somit zwei atmungsaktive Membranen oben und unten auf den Stoff aufgeschweißt, sodass durch Verdunsten von Wasser aus dem getränkten Stoff ein Kühlungseffekt, ähnlich wie beim Schwitzen der menschlichen Haut, erzielt wird.

Erfindungsgemäß erfolgt dabei die Verbindung der Membranbahn lediglich mit den erhobenen Fadenbereichen der Stoffbahn, wobei die Anzahl, Größe, Form und Anordnung der Verschmelzungsstellen durch entsprechende Strahlformung, Strahllenkung, Strahlabschattung oder andere geeignete Maßnahmen beliebig wählbar ist. Die Verbindung kann kontinuierlich oder diskontinuierlich erfolgen. Unter kontinuierlich wird in diesem Zusammenhang eine flächige Verbindung verstanden, bei der nahezu alle erhobenen Fadenbereiche der Stoffbahn mit der Membranbahn partiell verschmolzen, d. h. verschweißt sind. Vorzugsweise sind die Stoffbahn und die Membranbahn bei einer Ausführungsform der Erfindung miteinander diskontinuierlich verbunden. Dies bedeutet, dass das erfindungsgemäße Textillaminat ein Verbindungsraster besitzt, das eine Vielzahl von voneinander entfernt angeordneten Verbindungspunkten umfasst und/oder aus einer Anzahl von mit Abstand zueinander angeordneten, sich parallel erstreckenden oder sich schneidenden Verbindungslinien zusammengesetzt ist, und/oder das von einer Menge von beliebig geformten, nicht miteinander oder miteinander verbundenen beliebig geformten Verbindungsmustern gebildet ist.

Die Membranbahn kann direkt und/oder indirekt über die Stoffbahn mittels dem Laserdurchstrahlverfahren lokal erwärmt und aufgeschmolzen werden. Dazu wird der Laserstrahl alternativ auf die Membranbahn und/oder die Stoffbahn fokussiert, wobei das Laserlicht vorzugsweise auf die der Stoffbahn abgewandete Flachseite der Membranbahn gerichtet ist und wobei die Membranbahn und/oder die Stoffbahn Laserlicht absorbierende Farbstoffe aufweisen kann.

Bei einer bevorzugten Ausführungsform der Erfindung weist die Membranbahn einen Wasserdampfdurchgangswiderstand Rₑₜ von weniger als 20 m²Pa/W auf. Dabei kann die Membranbahn an sich eine beliebige Dicke aufweisen. Bevorzugt wird unabhängig von der Atmungsaktivität eine Membranbahn mit einer Dicke zwischen 4 und 100 µm.

Generell kann die Stoffbahn des erfindungsgemäßen Textillaminates in Form eines Gewebes, eines Gestrickes, eines Gewirkes, eines Geflechtes, eines Gestickes, eines Vlieses oder eines Filzes vorliegen. Die Erfindung schließt auch ein, dass es sich bei den miteinander verbundenen Lagen bereits um Zuschnitte handelt, die aus entsprechenden Stoffbahnen bzw. Membranbahnen herausgeschnitten und ausgerichtet übereinander positioniert sind.

Das erfindungsgemäße Verfahren zum Herstellen eines erfindungsgemäßen atmungsaktiven, wasserdichten vorstehend beschriebenen Textillaminates umfasst die folgenden Schritte:
● Zusammenfügen der Kunststofffaserfäden aufweisenden Stoffbahn mit der wasserdampfdurchlässigen folienartigen wasserdichten thermoplastischen Membranbahn;
● Anpressen der Membranbahn an die Stoffbahn;
● Beaufschlagen der Membranbahn mit Laserlicht;
● Kontinuierliches und/oder diskontinuierliches Verbinden der Membranbahn mit der Stoffbahn durch Erwärmen der Stoffbahn und/oder der Membranbahn im Laserdurchstrahlverfahren, abhängig davon, ob die Stoffbahn und/oder die Membranbahn Laserlicht absorbierende Farbstoffe aufweist, bis die Membranbahn plastifiziert ist, und Andrücken von erhobenen Fadenbereichen der Kunststofffaserfäden der Stoffbahn an die Membranbahn oder Andrücken der Membranbahn an erhobene Fadenbereiche der Kunststofffaserfäden der Stoffbahn mit Ausbildung von stoffschlüssigen Verschmelzungsstellen zwischen der Membranbahn und der Stoffbahn; und
● Abkühlen der Membranbahn und der Stoffbahn unter Beibehaltung der Anpressung.

Vorzugsweise erfolgt das Pressen der Membranbahn gegen die Stoffbahn bei einer bevorzugten Ausführungsform der Erfindung zwischen zwei Platten oder sich drehenden Walzen durch Druckbeaufschlagung, wobei die der Membranbahn zugeordnete Platte oder Walze für Laserlicht transparent ist. Dabei erfolgt das Pressen der Membranbahn an die Stoffbahn entweder zwischen einer Auflageplatte und einer Pressplatte oder zwischen einer Auflagewalze und einer Presswalze durch mechanische Druckmittel, wobei die Stoffbahn an der Auflageplatte bzw. der Auflagewalze und die Membranbahn an der Pressplatte bzw. der Presswalze anliegt. Durch die Pressplatte bzw. die Presswalze, die für das Laserlicht transparent ausgebildet ist, wird die Membranbahn und/oder die Stoffbahn vorzugsweise mit dem Laserlicht im Laserdurchstrahlverfahren beaufschlagt.

Alternativ erfolgt bei einer anderen Ausführungsform der Erfindung das Pressen der Membranbahn gegen die Stoffbahn vorzugsweise auf einer unbeweglichen Platte oder sich drehender Walze durch Sogbeaufschlagung, wobei die der Stoffbahn zugeordnete Platte oder Walze eine Vielzahl von Ansauglöchern für die Membranbahn aufweist. Dabei erfolgt das Pressen der Membranbahn an die Stoffbahn auf einer Auflageplatte oder Auflagewalze durch Saugmittel die mit den Ansauglöchern wirkverbunden sind, wobei die Stoffbahn an der Auflageplatte bzw. der Auflagewalze und die Membranbahn an der Stoffbahn anliegt. Die Membranbahn wird durch die Stoffbahn mit Unterdruck beaufschlagt, sodass die Membranbahn vom dem auf die der Stoffbahn abgewandten Flachseite lastenden atmosphärischen Luftdruck gegen die Stoffbahn gepresst, die sich an der Auflageplatte oder der Auflagewalze abstützt.

Ansonsten kann das Pressen der Membranbahn gegen die Stoffbahn günstigerweise auch durch Blasbeaufschlagung der Membranbahn auf einer Platte oder sich drehenden Walze erfolgen. Dabei erfolgt das Pressen der Membranbahn an die Stoffbahn auf einer Auflageplatte oder Auflagewalze, wobei die Stoffbahn an der Auflageplatte bzw. Auflagewalze und die Membranbahn an der Stoffbahn anliegt, durch Blasmittel, die der Auflageplatte oder Auflagewalze gegenüberliegend angeordnet sind. Von den Blasmitteln geht mindestens ein Druckluftstrahl (kalt oder vorgewärmt) aus, der auf die zwischen den Blasmitteln und der Auflageplatte oder Auflagewalze befindliche Membranbahn gerichtet ist. Durch die Blasbeaufschlagung mit Druckluft wird die Membranbahn in Richtung der Auflageplatte bzw. der Auflagewalze gegen die sich dort abstützende Stoffbahn gedrückt.

Bei einer bevorzugten Ausführungsform der Erfindung erfolgt das Pressen der Membranbahn gegen die Stoffbahn auf einer sich drehenden Auflagewalze durch Zugbeaufschlagung der Membranbahn erfolgt. Die Zugbeaufschlagung wird durch eine Spannwalze erreicht, die derart gegenüber der Auflagewalze angeordnet ist, das diese die Membranbahn zum Einen spannt und zum Anderen gegen die Anpressrolle zieht, an der die Stoffbahn anliegt. Das Laserlicht, das von einer der Auflagewalze gegenüberliegend angeordneten Laserlichtquelle ausgeht, wird dabei direkt auf die Membranbahn gerichtet. Diese Lehre schließt auch die physikalische Umkehr dieser Anordnung ein, bei der die Membranbahn an der Auflagewalze anliegt und die Stoffbahn durch entsprechende Zugbeaufschlagung gegen die Membranbahn gezogen wird, sodass sich die Stoffbahn und die Membranbahn an der Auflagewalze abstützen. In diesem Fall wird das Laserlicht durch die Auflagewalze auf die Membranbahn gerichtet, die natürlich dann für das Laserlicht transparent ausgebildet sein muss.

Vorzugsweise wird zum Pressen der Membranbahn gegen die Stoffbahn durch Sogbeaufschlagung eine Ausgleichsplatte auf der Membranbahn der Auflageplatte gegenüberliegend angeordnet bzw. eine Ausgleichsbahn mit der Membranbahn der Auflagewalze gegenüberliegend zusammengeführt, wobei die Ausgleichsplatte bzw. die Ausgleichsbahn gegenüber der Membranbahn deutlich biegesteifer und für das Laserlicht transparent ist. Die Ausgleichsplatte oder Ausgleichsbahn auf der Membranbahn verteilt den auf die der Stoffbahn abgewandten Flachseite lastenden atmosphärischen Luftdruck gleichmäßig auf die Membranbahn und verhindert, dass die Membranbahn zwischen den erhobenen Fadenbereichen der Kunststofffaserfäden der Stoffbahn muldenförmig verformt wird.

Vorzugsweise wird zum Pressen der Membranbahn gegen die Stoffbahn durch Blasbeaufschlagung ebenfalls eine Ausgleichsplatte auf der Membranbahn der Auflageplatte gegenüberliegend angeordnet bzw. eine Ausgleichsbahn mit der Membranbahn der Auflagewalze gegenüberliegend zusammengeführt, wobei die Ausgleichsplatte bzw. die Ausgleichsbahn gegenüber der Membranbahn deutlich biegesteifer und für das Laserlicht transparent ist. Die Ausgleichsplatte oder Ausgleichsbahn auf der Membranbahn verteilt den auf die der Stoffbahn abgewandten Flachseite lastenden Blasdruck der Druckluft gleichmäßig auf die Membranbahn und verhindert, dass die Membranbahn zwischen den erhobenen Fadenbereichen der Kunststofffaserfäden der Stoffbahn muldenförmig verformt wird.

Generell schließt die Erfindung auch die physikalische Umkehr der vorstehend beschriebenen Maßnahmen zumindest bei der Pressung der Membranbahn gegen die Stoffbahn durch Blasbeaufschlagung ein. Demzufolge kann die Membranbahn dabei auch direkt auf der Anlageplatte aufliegen oder sich direkt an der sich drehenden Anlagewalze abstützen, wobei dann in jedem Fall auf der Membranbahn abgewandeten Flachseite der Stoffbahn eine Ausgleichsplatte auf der Membranbahn der Auflageplatte gegenüberliegend angeordnet bzw. eine Ausgleichsbahn mit der Membranbahn der Auflagewalze gegenüberliegend zusammengeführt werden muss, um die offene Stoffbahn gegen Membranbahn zu pressen. Es ist selbstverständlich, dass die Anlageplatte bzw. Anlagewalze dann für Laserlicht transparent ausgebildet ist, um die Membranbahn mit Laserlicht beaufschlagen zu können.

Erfindungsgemäß werden mit dem vorgeschlagenen neuen Verbindungsverfahren vom Membranbahn und Stoffbahn die Stoffbahn und die Membranbahn vorzugsweise diskontinuierlich miteinander verbunden. Dazu werden die Verschmelzungsstellen im Laserdurchstrahlverfahren nach dem Anpressen der Membranbahn an die Stoffbahn, oder umgekehrt, mittels einer Schattenmaske, eines diffraktiven optischen Elementes oder eines Laserscanners erzeugt. Dabei wird ein Punkt- oder Linienmuster zur Verbindung der Membranbahn mit der Stoffbahn auf die Membranbahn und die Stoffbahn projiziert, das äußerst feine Größenwerte aufweist. Damit wird die atmungsaktive Fläche der Membranbahn deutlich vergrößert, wobei eine zuverlässige und dauerhafte Verbindung der Membranbahn mit der Stoffbahn sichergestellt ist.

Nachfolgend wird die Erfindung anhand einiger in der Zeichnung dargestellter Ausführungsbeispiele näher erläutert. Weitere Merkmale der Erfindung ergeben sich aus der folgenden Beschreibung der Ausführungsbeispiele der Erfindung in Verbindung mit den Ansprüchen und den beigefügten Zeichnungen. Die einzelnen Merkmale können für sich allein oder zu mehreren bei unterschiedlichen Ausführungsformen der Erfindung verwirklicht sein. Es zeigen:
- Figur 1: eine erfindungsgemäßes Textillaminat, mit einer an eine Stoffbahn anlaminierten Membranbahn, in einer Ausschnittsvergrößerung;
- Figur 2: eine Anordnung zur Durchführung des erfindungsgemäßen Laserdurchstrahlschweißens für das Verbinden einer Membranbahn mit einer Stoffbahn unter Bildung des erfindungsgemäßen Textillaminats aus Figur 1, als Prinzipdarstellung;
- Figur 3: verschiedene Strukturierungsarten zum diskontinuierlichen Verbinden der Membranbahn mit der Stoffbahn in einem definierbaren Raster mittels des in Figur 2 dargestellten Verfahrens, mit Verwendung einer Schattenmaske (Fig. 3a), eines diffraktiven optischen Elementes (Fig. 3b) und eines Laserscanners (Fig. 3c);
- Figur 4: das erfindungsgemäße Laserdurchstrahlverfahren zum Verbinden der Membranbahn mit der Stoffbahn, bei dem das Pressen der Membranbahn an die Stoffbahn durch mechanische Druckbeaufschlagung (Fig. 4a), durch Sogbeaufschlagung (Fig. 4b) und Blasbeaufschlagung (Fig. 4c) der Membranbahn in Verbindung mit einer Anlageplatte erfolgt;
- Figur 5: Laserdurchstrahlverfahren zum Verbinden der Membranbahn mit der Stoffbahn, bei dem das Pressen der Membranbahn an die Stoffbahn durch mechanische Druckbeaufschlagung (Fig. 5a), durch Sogbeaufschlagung (Fig. 5b) und Blasbeaufschlagung (Fig. 5c) der Membranbahn in Verbindung mit einer sich drehenden Anlagewalze erfolgt; und
- Figur 6: Laserdurchstrahlverfahren zum Verbinden der Membranbahn mit der Stoffbahn, bei dem das Pressen der Membranbahn an die Stoffbahn durch Spannen der Stoffbahn und der Membranbahn gegen eine sich drehende Anlagewalze erfolgt.

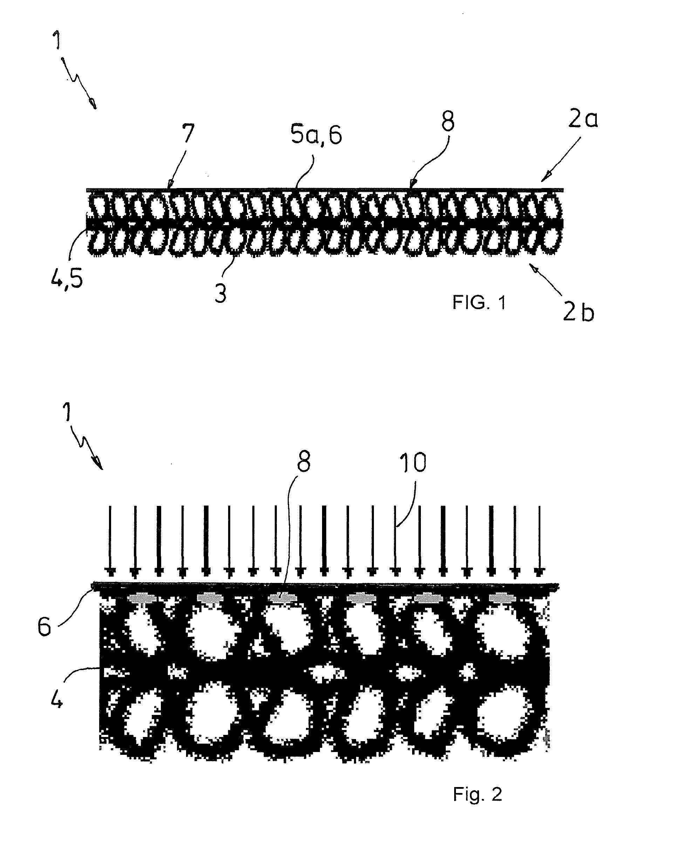

Die Figur 1 zeigt ein wasserdampfdurchlässiges wasserdichtes Textillaminat 1, vorzugsweise zur Weiterverarbeitung zu wetterschützenden Bekleidungsstücken, mit zwei übereinander angeordneten miteinander verbundenen Lagen 2a, 2b aus ebenem Bahnmaterial, wobei eine Kunststofffaserfäden 3 aufweisende offene Stoffbahn 4 eine Oberschicht 5 und eine folienartige wasserdampfdurchlässige wasserdichte thermoplastische Membranbahn 6 eine Unterschicht 5a bildet. Dabei weisen die Kunststofffaserfäden 3 der Stoffbahn 4 erhobene Fadenbereiche 7 auf, die an der Membranbahn 6 in Anlage gehalten und/oder mit der Membranbahn 6 partiell stoffschlüssig verschmolzen sind. Die Membranbahn 6 weist Verschmelzungsstellen 8 für die erhobenen Fadenbereiche 7 auf, die im Laserdurchstrahlverfahren erzeugt sind. Dabei ist die Stoffbahn 4 nach Art eines Gewebes, eines Gestrickes, eines Gewirkes, eines Geflechtes, eines Gestickes, eines Vlieses oder eines Filzes hergestellt. Die mit der Stoffbahn 4 verbundene Membranbahn 6 weist einen Wasserdampfdurchgangswiderstand Rₑₜ von weniger als 20 m²Pa/W und eine Dicke zwischen 4 und 100 µm auf. Die Stoffbahn 4 und/oder die Membranbahn 6 sind mit in der Zeichnung nicht dargestellten Laserlicht absorbierenden Farbstoffen ausgestattet.

Die Figur 2 zeigt eine Anordnung zum erfindungsgemäßen Laserdurchstrahlverfahren für das Verbinden der Membranbahn 6 mit der Stoffbahn 4 unter Bildung des erfindungsgemäßen Textillaminates 1, als Prinzipdarstellung. Bei der Stoffbahn 4 handelt sich um Maschenware wie beispielsweise ein Gestrick. Die Stoffbahn 4 weist Kunststofffaserfäden 3 auf, die Maschen 9 bilden. Sie ist gestreckt und eben angeordnet und trägt die Membranbahn 6. Die Membranbahn 6 liegt an den erhobenen Fadenbereichen 7 der die Maschen 9 bildenden Kunststofffaserfäden 3 an, die nach dem lokalen Plastifizieren der Membranbahn 6 an den Verschmelzungsstellen 8 durch das Laserdurchstrahlverfahren partiell beim Anpressen der Membranbahn 6 an die Stoffbahn 4 mit der Membranbahn 6 lokal verschmolzen werden. Zum Plastifizieren der Membranbahn 6 wird diese mit Laserlicht 10 beaufschlagt. Die Laserlichtquelle, von der das Laserlicht ausgeht, ist in der Zeichnung nicht dargestellt.

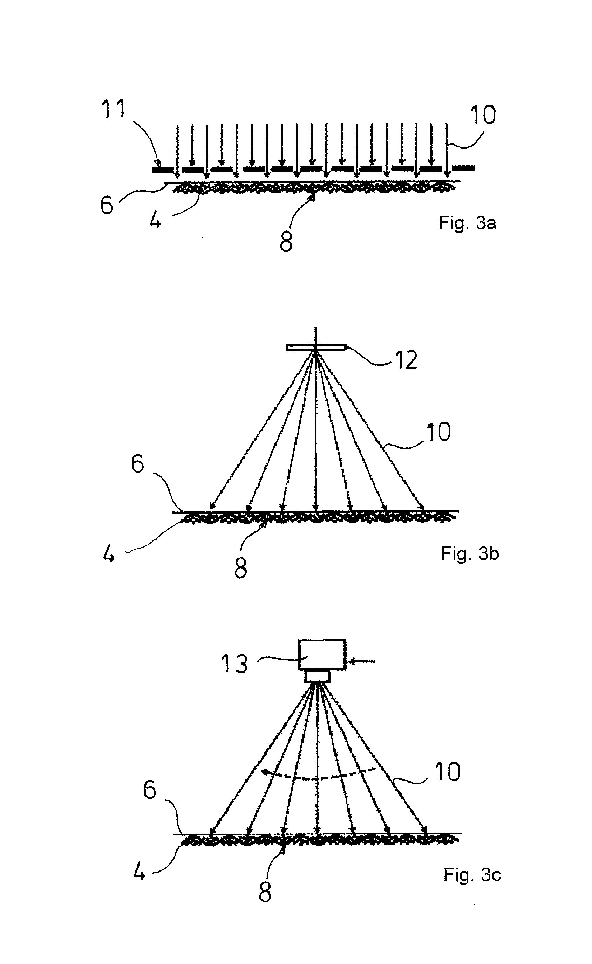

Die Figur 3 zeigt verschiedene Strukturierungsarten zum diskontinuierlichen Verbinden der Membranbahn 6 mit der Stoffbahn 4 in einem definierbaren Raster mittels des in der Figur 2 nur prinzipiell dargestellten Laserdurchstrahlverfahrens. Gemäß der Figur 3a erfolgt die Strukturierung des erfindungsgemäßen Textillaminats 1 mittels einer Schattenmaske 11, die die Membranbahn 6 in einem vorbestimmten Raster örtlich abschattet. Dort wo die Schattenmaske 11 das Laserlicht 10 durchlässt, entstehen die Verschmelzungsstellen 8 für die Kunststofffaserfäden 3 mit der Membran 6. Die Figur 3b veranschaulicht die Strukturierung des erfindungsgemäßen Textillaminates 1 mittels eines diffraktiven optischen Elementes 12 (DOE), das wie die Schattenmaske 11 ein simultanes Muster auf der Membranbahn 6 erzeugt. Durch das DOE 12 erfährt das Laserlicht 10 örtliche Phasenverschiebungen, die zu einem von dem DOE 12 bestimmten projizierten Muster der Verschmelzungsstellen 8 an der Membranbahn 6 führen. Die Figur 3c zeigt die entsprechende Strukturierung des Textillaminates 1 mittels eines Laserscanners 13, der ein entsprechend gewünschtes Muster mit einem Durchlauf erzeugt. In den Figuren 3a bis 3c ist lediglich das Laserlicht 10 symbolisch dargestellt, auf die Abbildung der Laserlichtquelle, von der das Laserlicht 10 ausgeht, wurde verzichtet. Die Funktion, Auslegung, Anwendung und Wirkungsweise von Schattenmasken, diffraktiven optischen Elementen und Laserscanner ist im Hinblick auf das an sich bekannte Laserdurchstrahlverfahren in vielfältigen Druckschriften des Standes der Technik bereits offenbart und dem Fachmann daher geläufig, sodass diese hier nicht näher beschrieben werden müssen.

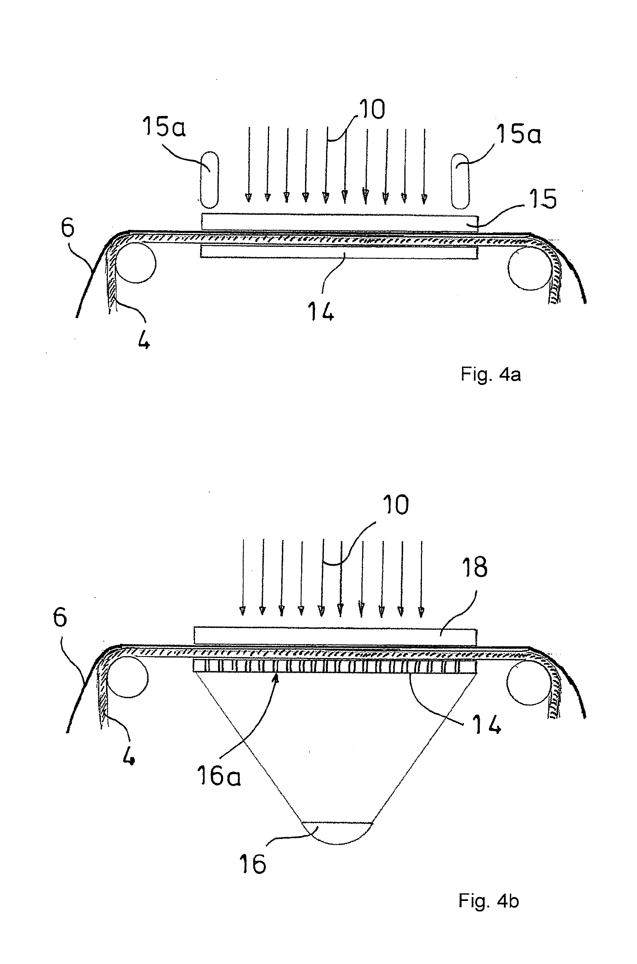

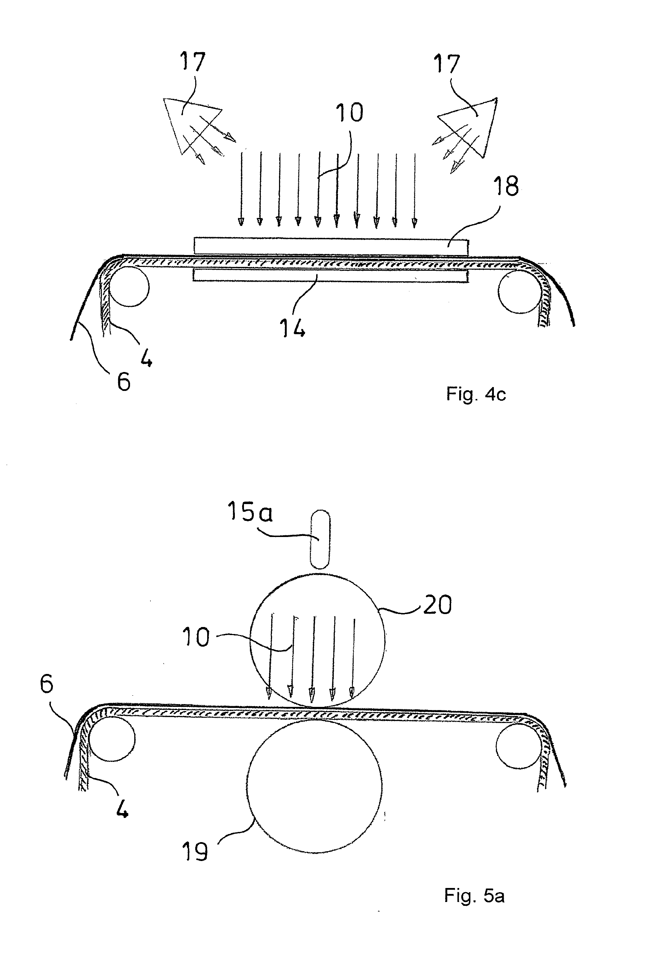

Die Figur 4 zeigt das erfindungsgemäße Laserdurchstrahlverfahren zum kontinuierlichen Verbinden der Membranbahn 6 mit der Stoffbahn 4 detaillierter. In den Figuren 4a, 4b, 4c sind drei prinzipiell unterschiedliche mögliche Varianten zum Anpressen der Membranbahn 6 an die Stoffbahn 4 während des Laserdurchstrahlverfahrens abgebildet. In allen drei Abbildungen liegt die Stoffbahn 4 an einer Auflageplatte 14 an. Die Membranbahn 6 ist jeweils auf der Stoffbahn 4 angeordnet und wird bei der Variante gemäß Figur 4a durch mechanische Druckbeaufschlagung, bei der Variante gemäß Figur 4b durch Sogbeaufschlagung und bei der Variante gemäß Figur 4c durch Blasbeaufschlagung gegen die Stoffbahn 4 gepresst.

Die mechanische Druckbeaufschlagung erfolgt über eine auf die Membranbahn 6 aufgelegte Pressplatte 15, die mit Druckmitteln 15a ausgestattet ist. Die Pressplatte 15 ist für das Laserlicht 10 transparent, so dass das Laserlicht 10 durch die Pressplatte 10 auf die Membranbahn 6 gerichtet werden kann. Die Sogbeaufschlagung der Membran 6 erfolgt über Saugmittel 16, die mit Ansauglöchern 16a kommunizieren, die in der Auflageplatte 14 in einer Vielzahl ausgebildet sind. Über die Ansauglöcher 16a wird die Membranbahn 6 in Richtung der Auflageplatte 14 gezogen und so an die Stoffbahn 4 angepresst. Die Blasbeaufschlagung der Membranbahn 6 erfolgt mittels Blasmitteln 17, die mit Abstand zu der Membranbahn 6 der Auflageplatte 14 gegenüberliegend angeordnet sind und die die Membranbahn 6 gegen die Stoffbahn 4 drücken. Damit die Membranbahn 6 dabei nicht deformiert wird, ist auf der Membran 6 eine zusätzliche für das Laserlicht 10 transparente Ausgleichsplatte 18 angeordnet. Über diese wird die Membranbahn 6 gleichmäßig gegen die Stoffbahn 4 und die Auflageplatte 14 gepresst.

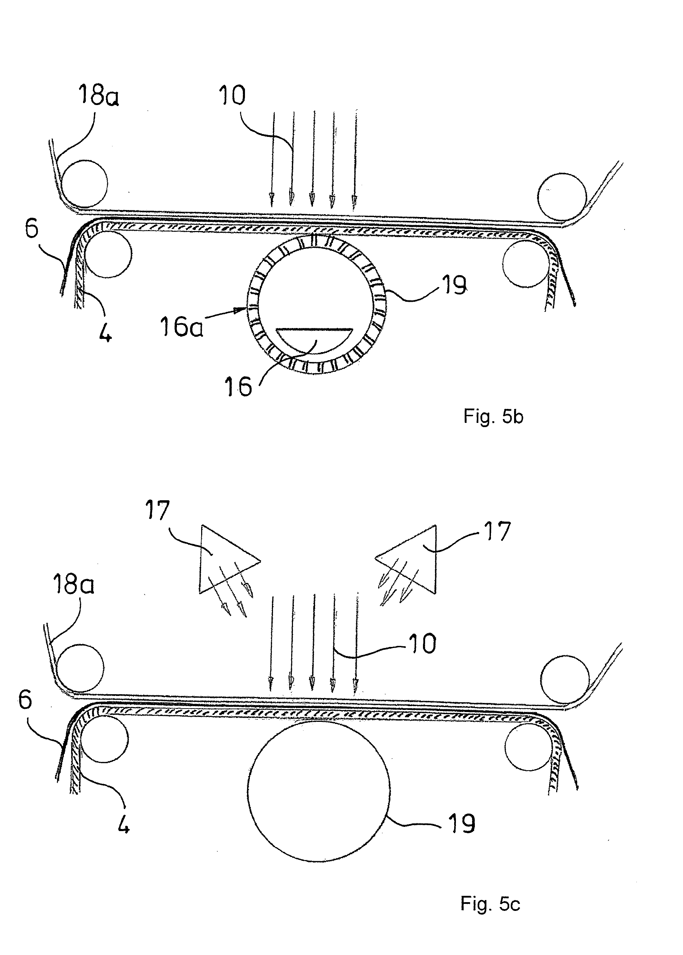

Die Figur 5 zeigt technische Abwandlungen der in der Figur 4 dargestellten Ausführungsformen zum Pressen der Membranbahn 6 gegen die Stoffbahn 4. Der Grundgedanke bleibt dabei unverändert, jedoch ist bei den in den Figuren 5a bis 5c dargestellten Ausführungsvarianten generell die Auflageplatte 14 durch eine sich drehende Auflagewalze 19 ersetzt. Der linienförmige Kontakt auf der Walze kann vergrössert werden indem eine weiches elastisches Material für die Walzenoberfläche verwendet wird oder die Stoffbahn 4 und die daran anliegende Membranbahn 6 nicht mehr eben, sondern gekrümmt über die Walze geführt werden. Die Krümmung der Stoffbahn 4 und der Membranbahn 6 ist abhängig vom Durchmesser der Anlagewalze 19. Des Weiteren ist die Pressplatte 15 durch eine entsprechend ausgebildete Presswalze 20 und die Ausgleichsplatte 18 durch eine Ausgleichsbahn 18a ersetzt.

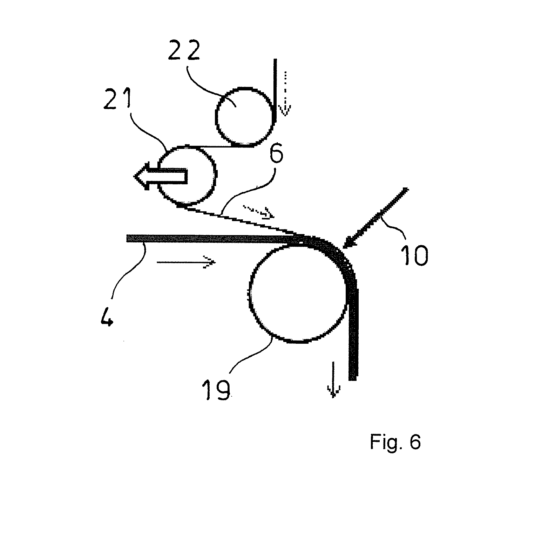

Die Figur 6 zeigt eine weitere Möglichkeit zum Pressen der Membranbahn 6 gegen die Stoffbahn 4 im Verbindung mit einer sich drehenden Auflagewalze 19, bei der keine Presswalze 20 benötigt wird. Dabei liegt die Stoffbahn 4 an der Auflagewalze 19 und die Membranbahn 6 an der Stoffbahn 4 an. Die Stoffbahn 4, wie auch die Membranbahn 6, werden gegen die Auflagewalze 19 gespannt. Dazu ist eine entsprechende Spannwalze 21 vorgesehen, die in Verbindung mit einer speziell angeordneten Führungswalze 22 die Membranbahn 6 in Richtung der Auflagewalze 19 zieht. Die vorgespannte Membranbahn 6 stützt sich auf der Stoffbahn 4 in Richtung der Auflagewalze 19 ab und drückt die Stoffbahn 4 gegen die Auflagewalze 19.

## Patentansprüche

1. Wasserdampfdurchlässiges wasserdichtes Textillaminat (1), mit mindestens zwei übereinander angeordneten miteinander verbundenen Lagen (2, 2a) aus ebenem Bahnmaterial, wobei eine Kunststofffaserfäden (3) aufweisende offene Stoffbahn (4) eine Oberschicht (5) und eine folienartige wasserdampfdurchlässige wasserdichte thermoplastische Membranbahn (6) eine Unterschicht (5a) bildet und wobei die Kunststofffaserfäden (3) der Stoffbahn (4) erhobene Fadenbereiche (7) aufweisen, die an der Membranbahn (6) in Anlage gehalten und/oder mit der Membranbahn (6) partiell verschmolzen sind, **dadurch gekennzeichnet, dass** die Membranbahn (6) stoffschlüssige Verschmelzungsstellen (8) mit den erhobenen Fadenbereiche (7) aufweist, die mittels Laserlicht (10) im Laserdurchstrahlverfahren erzeugt sind.

2. Textillaminat nach Anspruch 1, **dadurch gekennzeichnet, dass** die Stoffbahn (4) und/oder die Membranbahn (6) Laserlicht (10) absorbierende Farbstoffe aufweist.

3. Textillaminat nach Anspruch 1 oder 2, **dadurch gekennzeichnet, dass** die Stoffbahn (4) und die Membranbahn (6) diskontinuierlich miteinander verbunden sind.

4. Textillaminat nach einem der vorstehenden Ansprüche, **dadurch gekennzeichnet, dass** die Membranbahn (6) einen Wasserdampfdurchgangswiderstand Rₑₜ von weniger als 20 m²Pa/W aufweist.

5. Textillaminat nach einem der vorstehenden Ansprüche, **dadurch gekennzeichnet, dass** die Membranbahn (6) eine Dicke zwischen 4 und 100 µm aufweist.

6. Verfahren zum Herstellen eines atmungsfähigen wasserdichten Textillaminats (1) gemäß einem der vorstehenden Ansprüche, mit den folgenden Schritten:
● Zusammenführen einer Kunststofffaserfäden (3) aufweisenden offenen Stoffbahn (4) mit einer folienartigen wasserdampfdurchlässigen wasserdichten thermoplastischen Membranbahn (6);
● Anpressen der Membranbahn (6) an die Stoffbahn (4);
● Beaufschlagen der Membranbahn (6) mit Laserlicht (10);
● Kontinuierliches und/oder diskontinuierliches Verbinden der Membranbahn (6) mit der Stoffbahn (4) durch Erwärmen der Stoffbahn (4) und/oder der Membranbahn (6) im Laserdurchstrahlverfahren, abhängig davon, ob die Stoffbahn (4) und/oder die Membranbahn (10) Laserlicht (10) absorbierende Farbstoffe aufweist, bis die Membranbahn (10) plastifiziert ist und Andrücken von erhobenen Fadenbereichen (7) der Kunststofffaserfäden (3) der Stoffbahn (4) an die Membranbahn (6) durch das Anpressen der Stoffbahn (4) an die Membranbahn (6) mit Ausbildung von stoffschlüssigen Verschmelzungsstellen (8) zwischen der Membranbahn (6) und der Stoffbahn (4); und
● Abkühlen der Membranbahn (6) und der Stoffbahn (4) unter Beibehaltung der Pressung.

7. Verfahren nach Anspruch 6, **dadurch gekennzeichnet, dass** das Pressen der Membranbahn (6) gegen die Stoffbahn (4) zwischen einer Auflageplatte (14) und einer Pressplatte (15) oder zwischen einer sich drehenden Auflagewalze (19) und einer sich drehenden Presswalze (20) durch mechanische Druckbeaufschlagung erfolgt, wobei die Stoffbahn (4) an der Auflageplatte (14) bzw. der Auflagewalze (19) und die Membranbahn (6) an der Pressplatte (15) bzw. der Presswalze (20) anliegt und die Pressplatte (15) bzw. die Presswalze (20) für Laserlicht (10) transparent ausgebildet ist.

8. Verfahren nach Anspruch 6, **dadurch gekennzeichnet, dass** das Pressen der Membranbahn (6) gegen die Stoffbahn (4) auf einer unbeweglichen Auflageplatte (14) oder sich drehenden Auflagewalze (19) durch Sogbeaufschlagung erfolgt, wobei die Stoffbahn (4) an einer Auflageplatte (14) bzw. einer Auflagewalze (19) und die Membranbahn (6) an der Stoffbahn (4) anliegt und die Auflageplatte (14) bzw. die Auflagewalze (19) eine Vielzahl von Ansauglöchern (16a) für die Membranbahn (6) aufweist.

9. Verfahren nach Anspruch 6, **dadurch gekennzeichnet, dass** das Pressen der Membranbahn (6) gegen die Stoffbahn (4) auf einer Auflageplatte (14) oder auf einer sich drehenden Auflagewalze (19) durch Blasbeaufschlagung der Membranbahn (6) erfolgt, wobei die Stoffbahn (4) an der Auflagewalze (19) anliegt.

10. Verfahren nach Anspruch 6, **dadurch gekennzeichnet, dass** das Pressen der Membranbahn (6) gegen die Stoffbahn (4) auf einer sich drehenden Auflagewalze (19) durch Zugbeaufschlagung der Membranbahn (6) erfolgt.

11. Verfahren nach Anspruch 8, **dadurch gekennzeichnet, dass** zum Pressen der Membranbahn (6) gegen die Stoffbahn (4) eine Ausgleichsplatte (18) auf der Membranbahn (6) der Auflageplatte (14) gegenüberliegend angeordnet bzw. eine Ausgleichsbahn (18a) mit der Membranbahn (6) der Auflagewalze (19) gegenüberliegend zusammengeführt wird, wobei die Ausgleichsplatte (18) bzw. die Ausgleichsbahn (18a) gegenüber der Membranbahn (6) deutlich biegesteifer und für das Laserlicht (10) transparent ist.

12. Verfahren nach Anspruch 9, **dadurch gekennzeichnet, dass** zum Pressen der Membranbahn (6) gegen die Stoffbahn (4) eine Ausgleichsplatte (18) auf der Membranbahn (6) der Auflageplatte (14) gegenüberliegend angeordnet bzw. eine Ausgleichsbahn (18a) mit der Membranbahn (6) der Auflagewalze (19) gegenüberliegend zusammengeführt wird, wobei die Ausgleichsbahn (18a) gegenüber der Membranbahn (6) deutlich biegesteifer und für das Laserlicht (10) transparent ist.

13. Verfahren nach einem der vorstehenden Ansprüche 7 bis 12, dass nach dem Anpressen der Membranbahn (6) an die Stoffbahn (4) die Lage der Verschmelzungsstellen (8) im Laserdurchstrahlverfahren mittels einer Schattenmaske (11), eines diffraktiven optischen Elementes (12) oder eines Laserscanners (13) bestimmt werden.
